# DEMANDE DE BREVET EUROPEEN

(11) **EP 2 896 818 A1**
(43) Date de publication de la demande: **22.07.2015**
(21) Numéro de dépôt: 14190591.9
(22) Date de dépôt: 28.10.2014
(51) Int. Cl.: F02N 11/00

(54) **Dispositif d'arrêt axial sur un arbre et démarreur comportant un tel dispositif**

(30) Priorité: 31.10.2013 FR 1360697
(71) Demandeur: VALEO EQUIPEMENTS ELECTRIQUES MOTEUR, 94046 Créteil Cedex (FR)
(72) Inventeur: Seillier, Guillaume, 38290 La Verpillière (FR); Baleydier, Benoît, 69003 Lyon (FR)

(57) **Abrégé**

L'invention concerne un dispositif d'arrêt axial sur un arbre comportant :
a. une gorge circulaire pratiquée dans l'arbre ;
b. un anneau élastique (412) dont le diamètre (210) intérieur est inférieur au diamètre de l'arbre en dehors de ladite gorge ;
c. ledit anneau élastique (412) étant constitué d'un fil cintré selon une forme circulaire et selon un angle supérieur à 360 °.

L'invention concerne également un procédé pour l'assemblage d'un tel dispositif et un démarreur électrique comportant un tel dispositif

## Description

L'invention concerne un dispositif d'arrêt axial sur un arbre et un démarreur électrique comportant un tel dispositif. L'invention est plus particulièrement destinée à l'arrêt axial d'une pièce, tel un pignon, montée sur un arbre tournant à vitesse élevée.

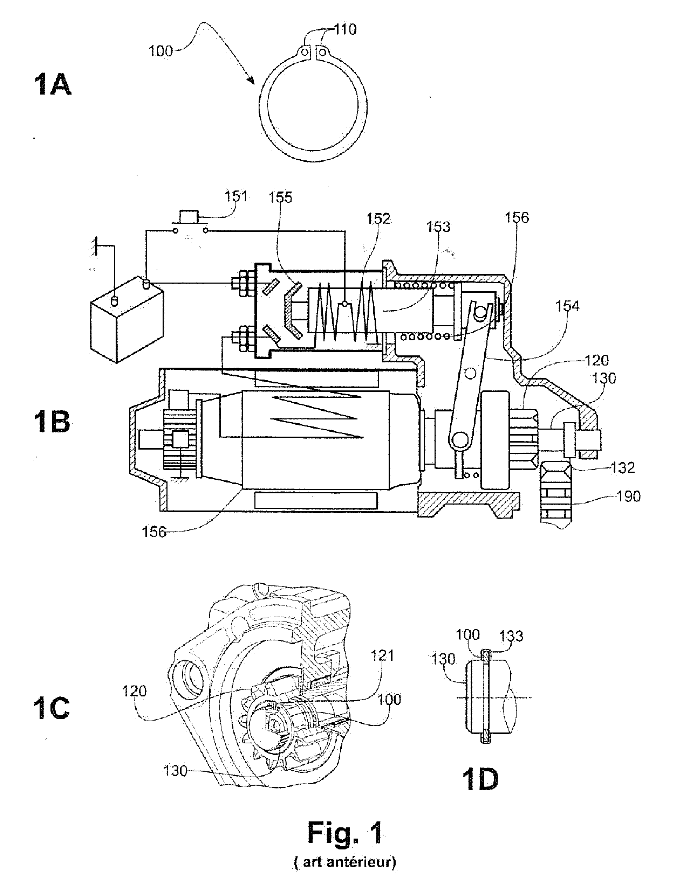

Selon un exemple de réalisation de l'art antérieur, l'arrêt axial d'une pièce sur un arbre est réalisé par un anneau élastique, couramment désigné par « circlips » installé par déformation dans une gorge pratiquée dans l'arbre. D'une manière générale un anneau élastique de l'art antérieur consiste en un fil élastique, généralement de section rectangulaire, cintré selon une forme circulaire et selon un angle inférieur à 360 °, de sorte à créer une fente facilitant l'expansion radiale de l'anneau. Un exemple de réalisation d'un tel circlips, dit extérieur car adapté à une installation dans une gorge pratiquée sur un arbre, est représenté figure 1A. Ledit circlips (100) prend la forme d'un anneau fendu de section évolutive, la section diamétralement opposée à la fente étant plus importante, et comporte de part et d'autre de ladite fente des oreilles (110) de manoeuvre qui en facilitent le démontage au moyen d'un outil approprié. Lorsque l'arbre sur lequel est monté un tel circlips est porté à une vitesse de rotation élevée, la masse des oreilles tend à écarter celles-ci l'une de l'autre, alors que la section opposée à la fente subit une force centrifuge plus élevée de sorte que ce circlips (100) de l'art antérieur tend à s'extraire de sa gorge sous l'effet de la force centrifuge. Même en utilisant un anneau de section uniforme et en supprimant les oreilles, la simple dissymétrie de la répartition des masses, du fait de la présence de la fente, entraîne un risque d'extraction de l'anneau élastique par centrifugation.

Dans le cas d'un assemblage en série, l'installation d'un tel anneau élastique à l'extrémité d'un arbre, est avantageusement réalisée au cours d'une opération se déroulant selon la direction axiale de cet arbre. Ladite opération consiste à placer un mandrin conique à l'extrémité de l'arbre, le plus grand diamètre dudit mandrin étant placé contre l'extrémité de l'arbre et étant égal ou légèrement supérieur au diamètre de l'arbre. L'anneau élastique est glissé axialement sur le mandrin conique au moyen d'une presse, produisant l'expansion radiale de l'anneau, puis, glissé sur l'arbre, jusqu'à la gorge, dans laquelle il se rétreint élastiquement. Cette opération est très rapide et particulièrement adaptée à un montage en grande série. En cas de besoin de démontage ultérieur, celui-ci est réalisé au moyen d'une pince adaptée en agissant sur les oreilles (110) de l'anneau élastique.

Figure 1B, selon un exemple de réalisation de l'art antérieur, un tel anneau élastique est utilisé notamment comme butée (132) axiale du pignon (120) lanceur d'un démarreur électrique pour moteur à combustion interne. Selon un exemple de réalisation d'un tel démarreur, ledit pignon (120) est lié en rotation à l'arbre (130) d'entraînement par l'intermédiaire de cannelures, notamment hélicoïdales. En fermant le contact (151) d'alimentation du solénoïde (152) de commande du démarreur, ledit solénoïde provoque le déplacement d'un noyau (153) plongeur, lequel déplace le pignon (120) lanceur par l'intermédiaire d'une fourchette (154), jusqu'à ce que ledit pignon s'arrête sur la butée (132) axiale de l'arbre (130) d'entraînement et engrène avec la couronne (190) de démarrage du moteur à combustion interne (non représenté). En bout de course, le plongeur (153) ferme le contact (155) électrique d'alimentation d'un moteur (156) à courant continu, lequel moteur entraîne le pignon (120) du lanceur en rotation par l'intermédiaire de l'arbre (130) d'entraînement de sorte à démarrer le moteur à combustion interne. La vitesse de rotation de l'arbre (130) d'entraînement et du pignon (120) lanceur est alors de l'ordre de 40 000 tours par minute. À une telle vitesse de rotation, lorsque la butée (132) est réalisée par un anneau élastique, tel un circlips, le risque d'extraction dudit circlips par l'effet de la force centrifuge est important.

À cette fin, figure 1C, selon un exemple de réalisation de l'art antérieur décrit dans le document FR 2 957 638, l'extrémité du pignon (120) lanceur comporte un lamage (121), lequel lamage coiffe l'anneau élastique (100) lorsque le pignon (120) arrive en butée sur ledit anneau, de sorte à le maintenir radialement et éviter son extraction de la gorge de l'arbre (130) d'entraînement sous l'effet de la force centrifuge. Cet aménagement de l'art antérieur donne satisfaction mais ne protège l'anneau (100) élastique de l'extraction que lorsque le pignon (120) coiffe ledit anneau par son lamage (121) d'extrémité, ce qui correspond aux conditions les plus critiques où la vitesse de rotation est maximale.

Lorsque le contact (151) d'alimentation du solénoïde de commande est à nouveau ouvert, ledit solénoïde (152) n'exerçant plus son action sur le plongeur, un ressort (156) de rappel repousse ledit plongeur (153), ce qui a pour effet d'ouvrir le contact (155) d'alimentation du moteur et de retirer le pignon (120) lanceur de l'engrènement avec la couronne (190) de démarrage du moteur à combustion interne. Dans ces conditions, l'arbre (130) d'entraînement, bien qu'il ne soit plus entraîné par le moteur (156) à courant continu ni par la couronne (190) de démarrage du moteur à combustion interne, continue cependant à tourner pendant quelques instants alors que l'anneau élastique (100) n'est plus coiffé par le lamage (121) du pignon (120) lanceur. Afin de pallier au risque d'extraction durant cette phase, figure 1D, une solution de l'art antérieur consiste à recouvrir l'anneau élastique par une capsule (133) annulaire, sertie au-dessus dudit anneau. L'installation de cette capsule (133) complexifie le montage de l'anneau l'élastique, ledit montage nécessitant l'installation de ladite capsule sur l'anneau élastique après que celui-ci ait été enfilé sur l'arbre (130). De plus, en cas de démontage ultérieur il est nécessaire de dessertir la capsule (133), puis de monter une capsule neuve lors du remontage.

Le document GB 628 288 décrit un anneau élastique d'arrêt axial apte à résister à l'extraction de son logement sous l'effet de la force centrifuge. Cet anneau élastique de l'art antérieur ne comporte pas de fente mais deux languettes diamétralement opposées aptes à s'introduire dans une gorge de l'arbre sur lequel cet anneau est monté, et deux masselottes, s'étendant radialement à l'extérieur de l'anneau et selon un décalage angulaire de 90 ° par rapport aux languettes. Sous l'effet de la force centrifuge, lesdites masselottes tendent à s'écarter radialement, en ovalisant l'anneau, ce qui a pour effet de rapprocher les languettes l'une de l'autre et d'améliorer le maintien de l'anneau dans la gorge. Le montage est réalisé en ovalisant l'anneau en rapprochant les deux masselottes, ce qui a pour effet d'écarter les languettes l'une de l'autre, et permet d'enfiler l'anneau sur l'arbre jusqu'à la gorge. Le maintien axial d'un tel anneau n'est réalisé que par les languettes, de sorte que celui-ci n'est pas adapté pour servir de butée. De plus, le montage de cet anneau élastique par ovalisation n'est pas réalisable au moyen d'un mandrin conique et nécessite une opération d'installation complexe.

L'invention vise à résoudre les inconvénients de l'art antérieur et concerne à cette fin un dispositif d'arrêt axial sur un arbre comportant :
a. une gorge circulaire pratiquée dans l'arbre ;
b. un anneau élastique dont le diamètre intérieur est inférieur au diamètre de l'arbre en dehors de ladite gorge ;
c. Ledit anneau élastique étant constitué d'un fil cintré selon une forme circulaire et selon un angle supérieur à 360 °.

Ainsi, cet anneau élastique présente à la fois une élasticité radiale, de manière similaire à celle d'un anneau fendu ce qui permet de l'enfiler sur un arbre par expansion radiale symétrique, mais l'enroulement du fil sur un angle supérieur à 360° empêche l'extraction de l'anneau de la gorge par centrifugation. En effet, d'une part, la répartition de masse est plus uniforme sur la circonférence de l'anneau, d'autre part le recouvrement relatif des extrémités du fil permet d'augmenter la résistance à la déformation de l'anneau lorsqu'il est soumis à une expansion radiale du fait de la force centrifuge. En effet, le fait d'avoir un recouvrement retarde la déformation à la force centrifuge.

Ainsi l'invention concerne un démarreur électrique pour un moteur à combustion interne, lequel démarreur comporte un arbre d'entraînement et un pignon lanceur en liaison glissière avec cet arbre d'entraînement, dans lequel le démarreur comporte un dispositif d'arrêt axial formant un dispositif de butée de fin de course dudit pignon lanceur sur l'arbre d'entraînement, le dispositif d'arrêt axial comportant : une gorge circulaire pratiquée dans l'arbre ;
b. un anneau élastique dont le diamètre intérieur est inférieur au diamètre de l'arbre en dehors de ladite gorge ;
c. Ledit anneau élastique étant constitué d'un fil cintré selon une forme circulaire et selon un angle supérieur à 360 °.

L'invention est avantageusement mise en oeuvre selon les modes de réalisation exposés ci-après lesquels sont à considérer individuellement ou selon toute combinaison techniquement opérante.

Selon un exemple de l'invention, l'enroulement du fil de l'anneau est supérieur à 540°. Ainsi, le fil se recouvre plus que la moitié de sa périphérie. Le fil se recouvre donc sur une portion angulaire supérieure à 180°. Le fait que le recouvrement dépasse les 180° a pour avantage que l'anneau résiste de façon étonnante beaucoup plus à la force de centrifugation. En effet il est nécessaire de déformer une plus grande longueur de l'anneau.

Avantageusement, au moins une des extrémités du fil comprends un rétrécissement progressif de la largeur radial formant une pente.

Avantageusement, l'anneau élastique du dispositif objet de l'invention comporte un soyage en regard de chaque extrémité du fil. Ainsi, l'épaisseur de l'anneau est uniforme sur toute sa circonférence malgré la présence du recouvrement aux extrémités. Le terme soyage désigne une opération de pliage consistant à réaliser deux pliages successifs et rapprochés sur la longueur d'un profilé ou d'une lame, les centres de pliages étant disposés de part et d'autre de la lame ou du profilé.

Selon un premier mode de réalisation du dispositif objet de l'invention, le soyage de l'anneau est un soyage selon la direction radiale dudit anneau. Autrement dit, le recouvrement du fil sur lui-même est radial. Ce mode de réalisation permet d'assurer une épaisseur constante de l'anneau et sa rigidité axiale, dans le sens de l'appui.

Selon un deuxième mode de réalisation du dispositif objet de l'invention, le soyage de l'anneau est un soyage selon la direction axiale dudit anneau. Autrement dit le recouvrement du fil sur lui-même est axial. Ce mode de réalisation permet notamment un démontage plus facile de l'anneau élastique, de plus la force d'appui exercée par la pièce arrêtée sur ledit anneau participe au maintien des extrémités et à la sécurité vis-à-vis de l'extraction par centrifugation dudit anneau. De plus, dans ce mode de réalisation, du fait que le recouvrement est axial, la résistance à la force centrifuge de l'anneau est plus importante. En effet, la déformation doit se faire sur toute la largeur radiale de l'anneau.

Avantageusement, selon les deux modes de réalisations, l'anneau du dispositif objet de l'invention est constitué d'un fil plat. Ce fil permet de réaliser un appui sur une plus grande surface.

Selon une variante avantageuse du deuxième mode de réalisation du dispositif objet de l'invention, les deux extrémités du fil de l'anneau arrivent en vis-à-vis l'une de l'autre, en regard du même soyage. Ce mode de réalisation est économique du point de vue de la réalisation le soyage étant réalisable par un pliage localisé du fil et ne nécessite pas d'amincissement du fil aux extrémités. De plus, ce mode de réalisation offre une sécurité accrue vis-à-vis du risque d'extraction par centrifugation tout en offrant une capacité d'expansion radiale supérieure de l'anneau pour l'assemblage du dispositif objet de l'invention.

Avantageusement, le fil de l'anneau du dispositif objet de l'invention est constitué d'un acier à bas carbone. Ce mode de réalisation est particulièrement économique et adapté à une fabrication en très grande série.

Selon une variante avantageuse, le fil constituant l'anneau élastique du dispositif objet de l'invention est constitué d'un alliage de titane. Ce mode de réalisation permet d'alléger l'anneau élastique tout en bénéficiant d'une capacité de déformation élastique supérieure de celui-ci.

Selon une autre variante avantageuse, le fil constituant l'anneau élastique du dispositif objet de l'invention est constitué d'un alliage superélastique. Ce mode de réalisation permet de bénéficier d'une capacité de déformation maximale de l'anneau élastique notamment pour l'assemblage et le démontage du dispositif objet de l'invention. La superélasticité est la propriété de certains matériaux, notamment des matériaux métalliques dits à mémoire de forme, de répondre à une sollicitation mécanique par une déformation sous l'effet d'un changement de phase réversible, induit par ladite sollicitation mécanique. Ce mode de déformation particulier permet audit matériau de se déformer élastiquement selon des taux de déformation pouvant atteindre 10 %.

L'invention concerne également un procédé pour l'assemblage d'un dispositif d'arrêt axial selon l'un quelconque des modes de réalisation précédents, lequel procédé comprend les étapes consistant à :
i. placer un mandrin conique sur l'extrémité de l'arbre le grand diamètre du cône étant placé contre ladite extrémité de l'arbre ;
ii enfiler l'anneau élastique sur le mandrin conique par le petit diamètre du cône ;
iii. pousser l'anneau sur le mandrin conique puis sur l'arbre jusqu'à ce qu'il pénètre dans la gorge de l'arbre.

Ce procédé d'assemblage est très rapide et compatible avec les installations de production existantes adaptées au montage d'anneaux élastiques de type circlips.

L'invention concerne également un procédé alternatif pour l'assemblage d'un dispositif d'arrêt axial selon l'invention, placé en extrémité d'un arbre, lequel procédé comprend les étapes consistant à :
x. écarter axialement une extrémité du fil du reste de l'anneau et placer ladite extrémité dans la gorge, la portée de l'arbre entre la gorge et son extrémité axiale étant insérée entre l'extrémité écartée du fil et le reste de l'anneau ;
y. tourner l'anneau relativement à l'arbre jusqu'à ce qu'il soit entièrement introduit dans la gorge.

Ce mode de réalisation est plus adapté au montage de l'anneau lors d'opération de maintenance ou de réparation et ne nécessite pas de presse. Ce procédé est également applicable pour le démontage de l'anneau, en réalisant l'étape y) avec un sens de rotation inverse.

L'invention concerne également un démarreur électrique pour un moteur à combustion interne, lequel démarreur comporte un arbre d'entraînement et un pignon lanceur en liaison glissière avec cet arbre d'entraînement, et qui comporte une butée de fin de course dudit pignon lanceur sur l'arbre d'entraînement, laquelle butée comporte un dispositif selon l'invention. Ainsi, la fonction de butée de fin de course du pignon lanceur est réalisée de manière particulièrement économique et avec un encombrement réduit.

Selon un mode de réalisation avantageux de démarreur objet de l'invention, le pignon lanceur comporte sur sa face venant en appui sur la butée, un lamage apte à coiffer l'anneau élastique du dispositif d'arrêt axial selon l'invention. Ainsi, la sécurité anti-extraction et améliorée lors de la phase de vitesse de rotation maximale de l'arbre d'entraînement, la sécurité intrinsèque de l'anneau étant suffisante, en dehors des phases d'entraînement du pignon lanceur, sans l'installation d'une capsule sur l'anneau.

L'invention est exposée ci-après selon ses modes de réalisation préférés, nullement limitatifs, et en référence aux figures 1 à 5 dans lesquelles :
- la figure 1 relative à l'art antérieur, montre diverses solutions techniques de l'art antérieur, figure 1A, un anneau élastique d'arrêt de type circlips selon une vue de face, figure 1B, une vue schématique en coupe d'un démarreur électrique, figure 1C, un exemple de réalisation d'un arrêt axial par un anneau élastique sur l'arbre d'entraînement d'un démarreur électrique selon une vue en perspective et en coupe partielle, figure 1D un exemple de réalisation d'un arrêt par un anneau élastique en bout d'arbre et comportant une capsule sertie de sécurité selon une vue partielle de profil ;
- la figure 2 montre selon des vues en perspective deux exemples de réalisation d'un anneau adapté au dispositif d'arrêt selon l'invention, figure 2A, comportant un recouvrement radial des extrémités du fil, figure 2B, comportant un recouvrement axial des extrémités du fil ;
- la figure 3 représente selon une vue de profil et une section A-A définie figure 2, un exemple de mise en oeuvre d'un procédé d'assemblage d'un exemple de réalisation du dispositif objet de l'invention, utilisant un anneau élastique selon le mode de réalisation de la figure 2A ;
- les figures 4a et 4b est une vue en perspective d'une variante de réalisation particulière du mode de réalisation de la figure 2B d'un anneau élastique adapté au dispositif objet de l'invention ;
- et la figure 5 est un synopsis d'un exemple de procédé d'assemblage d'un mode de réalisation du dispositif objet de l'invention utilisant l'anneau élastique de la figure 4.

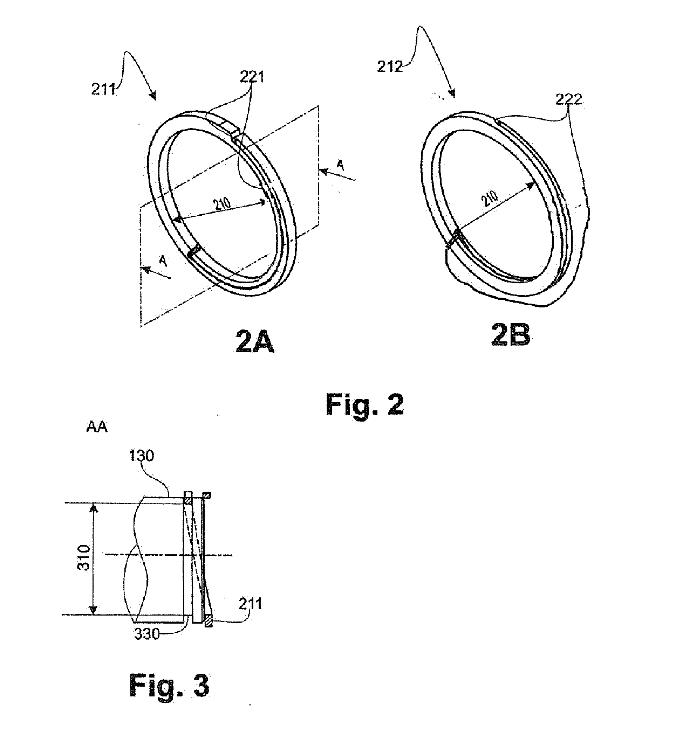

Figure 2, selon un exemple de réalisation l'anneau élastique du dispositif objet de l'invention est un anneau brisé (211, 212) constitué d'un fil plat enroulé sur plus d'un tour. Les extrémités du fil sont ainsi en recouvrement sur une portion angulaire significative, en l'occurrence supérieure à 180°. La figure 2A, les extrémités du fil sont en recouvrement radial, et ledit fil comprend un soyage (221) selon la direction radiale en regard de chaque extrémité, le fil étant aminci à la moitié de son épaisseur sur la longueur du recouvrement. Ainsi le diamètre de l'anneau est uniforme sur toute sa circonférence.

Figure 2B, selon un autre exemple de réalisation de l'anneau (212) élastique du dispositif objet de l'invention, le recouvrement des extrémités est axial et le fil comporte des soyages (222) axiaux en regard de chaque extrémité, les extrémités du fil étant amincies à la moitié de leur épaisseur selon la direction axiale au niveau du recouvrement.

Le fil constituant l'anneau élastique est constitué préférentiellement d'un matériau métallique, tel qu'un acier à bas carbone, présentant une limite élastique suffisante pour réaliser l'assemblage du dispositif et une formabilité adaptée pour la mise en forme de l'anneau. Selon un mode de réalisation particulier le fil d'acier bas carbone est cémenté pour en augmenter la dureté superficielle.

Figure 3, le dispositif d'arrêt objet de l'invention comprend un anneau élastique coopérant avec une gorge (330) réalisé dans l'arbre (130) sur lequel est réalisé l'arrêt axial. Cette gorge est obtenue par usinage selon des techniques connues de l'art antérieur. Le diamètre (310) en fond de gorge est sensiblement égal au diamètre (210, figure 2) de l'anneau élastique. L'assemblage du dispositif objet de l'invention est réalisé soit par expansion radiale de l'anneau et en l'enfilant ainsi expansé sur l'arbre (130) jusqu'à la gorge (330) où il se loge par rétreint élastique. Selon un procédé alternatif, l'assemblage du dispositif objet de l'invention est réalisé en décalant axialement les deux extrémités du fil, de sorte que la portée de l'arbre (130) comprise entre la gorge et l'extrémité de l'arbre soit prise entre les deux spires hélicoïdales ainsi formées. Puis par rotation de l'anneau (211) celui-ci est progressivement amené dans la gorge (330). La même opération est utilisée pour le démontage éventuel de l'anneau. Afin de faciliter la mise en oeuvre de ce procédé d'assemblage, l'anneau élastique est constitué d'un alliage de titane, notamment un alliage de titane comprenant de l'aluminium et du vanadium. Cette constitution permet d'obtenir une capacité de déformation élastique supérieure de l'anneau, tant en expansion radiale qu'en expansion axiale capacité d'expansion environ deux fois plus importante que celle d'un anneau brisé en acier à limite élastique équivalente. De plus, la masse volumique plus faible du matériau rend ledit anneau moins sensible à la centrifugation. Dans le cas d'une portée longue entre la gorge et l'extrémité de l'arbre, le dispositif objet de l'invention comprend, selon un mode de réalisation particulier, un anneau élastique constitué d'un fil superélastique dans la plage de température de fonctionnement du dispositif. À titre d'exemple non limitatif, selon ce mode de réalisation, le fil est constitué d'un alliage de nickel (Ni), de titane (Ti) et de fer (Fe). La plage de température dans laquelle un tel alliage présente un comportement superélastique est déterminée par le traitement thermo-mécanique imposé au matériau durant la fabrication de l'anneau élastique. Ainsi selon un mode de réalisation particulier, l'anneau élastique est configuré de telle sorte que son comportement soit superélastique au cours de l'assemblage, par exemple en réalisant l'assemblage alors que l'anneau est porté à basse température, et que l'anneau reprenne un comportement élastique à la température de fonctionnement du dispositif. Ainsi, l'anneau élastique présente de forte capacité d'expansion au cours de l'assemblage mais perd ces capacités d'expansion vis-à-vis de la centrifugation à la température de fonctionnement du mécanisme dans lequel le dispositif objet de l'invention est installé.

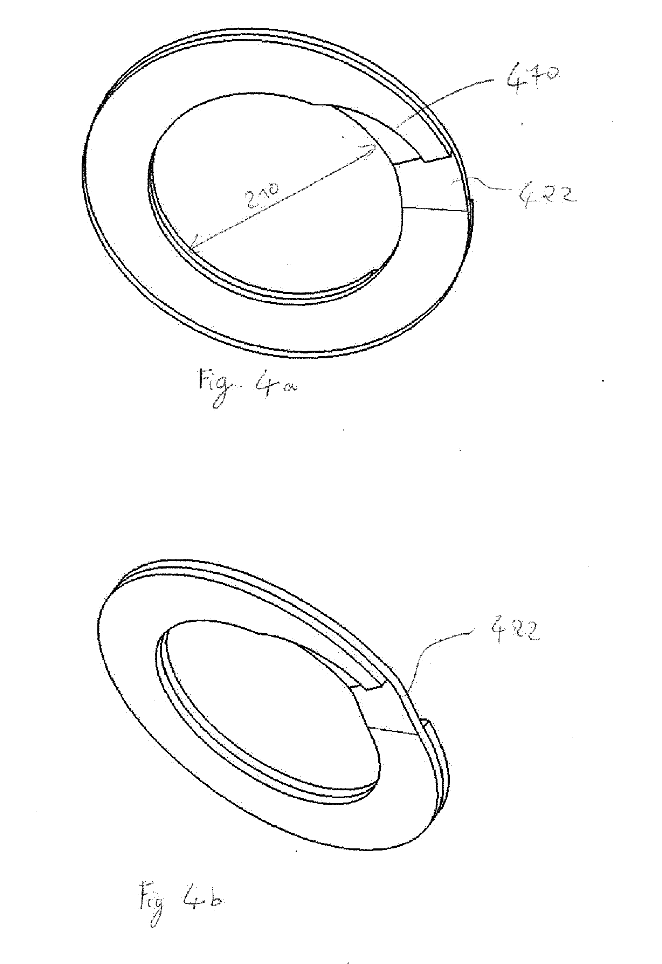

Figure 4, selon une variante du mode de réalisation de l'anneau comportant un recouvrement axial des extrémités, le fil de l'anneau (412) élastique est enroulé sur quasiment deux tours les deux extrémités arrivant en vis-à-vis l'une de l'autre de part et d'autre d'un même soyage (422) axial réalisé sur une épaisseur du fil. Le fil comprend sur au moins une de ces extrémités un amincissement radial progressif formant une pente 470 aux extrémités. Cette pente permet de faciliter le montage de l'anneau dans la fente. Du fait du recouvrement important du fil sur lui-même pour obtenir une épaisseur d'anneau uniforme. Le soyage (422) est avantageusement réalisé par un pliage localisé du fil. Ainsi, ce mode de réalisation de l'anneau (412) élastique du dispositif objet de l'invention est de réalisation particulièrement économique. De plus, l'enroulement du fil sur quasiment deux tours confère à l'anneau (412) selon ce mode de réalisation une capacité d'expansion supérieure tant dans le sens axial que radial ce qui en facilite le montage et le démontage. Finalement la présence d'une spire complète dans l'enroulement du fil, confère à ce mode de réalisation de l'anneau (412) élastique, une grande stabilité vis-à-vis du risque d'extraction par centrifugation.

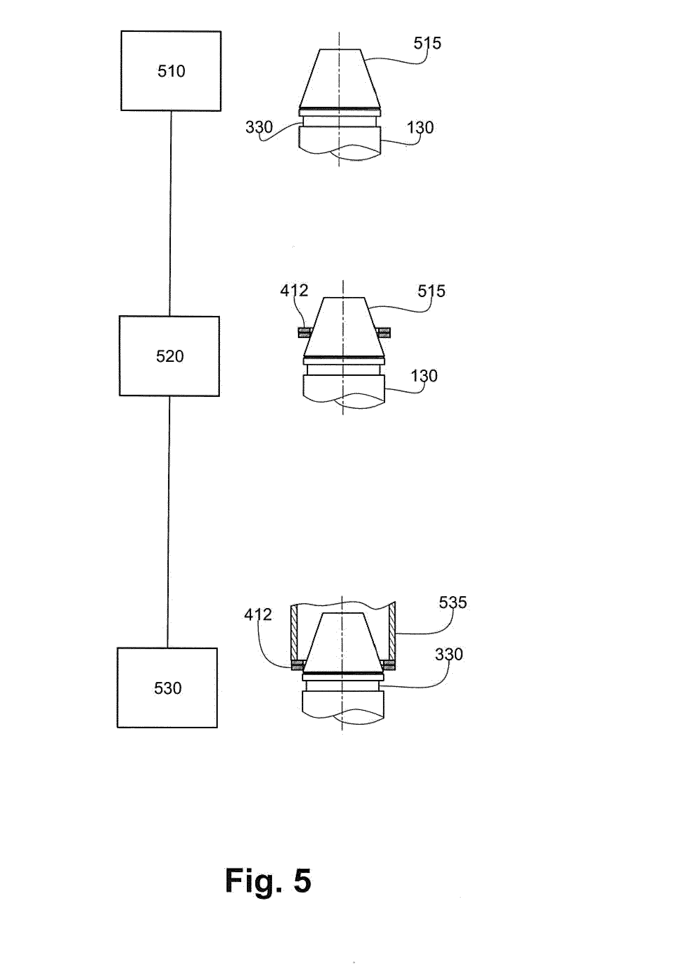

Figure 5, selon un exemple de réalisation, le procédé d'assemblage du dispositif objet de l'invention comprend une première étape (510) consistant à placer un mandrin (515) conique sur l'extrémité de l'arbre (130) sur lequel ledit dispositif est installé. Le diamètre le plus élevé du mandrin conique correspond sensiblement au diamètre de la portée de l'arbre (130) entre la gorge (330) destinée à recevoir l'anneau élastique (412) et l'extrémité de l'arbre. Selon une deuxième étape (520) de ce procédé, l'anneau (412) élastique est enfilé sur mandrin (515) conique. Selon une troisième étape (530) l'anneau (412) élastique est poussé au moyen d'une presse (535) jusque dans la gorge (330). Le déplacement axial de l'anneau élastique le long du mandrin conique provoque l'expansion radiale de cet anneau qui se rétreint élastiquement en arrivant dans la gorge.

Tant le procédé d'assemblage décrit figure 3 que le procédé d'assemblage décrit figure 5, sont compatibles avec tous les modes de réalisation de l'anneau élastique (211, 212, 412) du dispositif objet de l'invention.

En revenant à la figure 1B, le dispositif objet de l'invention est apte à constituer une butée (132) de fin de course sur l'arbre (130) d'entraînement d'un démarreur électrique. Le dispositif de butée de fin de course forme donc un dispositif de butée axial de fin de course du pignon sur l'arbre d'entraînement. Figure 2C, le dispositif objet de l'invention est avantageusement associé à un lamage (121) pratiqué sur la face d'appui du pignon (120) lanceur et qui vient coiffer l'anneau du dispositif objet de l'invention lorsque ledit pignon (120) arrive en butée. À cette phase du démarrage, la vitesse de rotation à laquelle est soumis l'anneau élastique est maximale et la couverture de l'anneau élastique, quel que soit son mode de réalisation, par le lamage (121) du pignon permet de sécuriser encore le comportement de l'anneau élastique vis-à-vis de la centrifugation.

La description ci-avant et les exemples de réalisation montrent que l'invention atteint les objectifs visés, en particulier le dispositif objet de l'invention permet de réaliser un arrêt axial économique et d'encombrement réduit, avec une sécurité accrue vis-à-vis de la centrifugation tout en étant compatible avec les moyens d'assemblage existants.

## Revendications

1. Démarreur électrique pour un moteur à combustion interne, lequel démarreur comporte un arbre (130) d'entraînement et un pignon (120) lanceur en liaison glissière avec cet arbre d'entraînement, **caractérisé en ce qu'**il comporte un dispositif d'arrêt axial formant un dispositif de butée de fin de course dudit pignon (120) lanceur sur l'arbre d'entraînement (130), le dispositif d'arrêt axial comportant :
a. une gorge (330) circulaire dans l'arbre (130) ;
b. un anneau élastique (211, 212, 412) dont le diamètre (210) intérieur est inférieur au diamètre de l'arbre en dehors de ladite gorge et **en ce qu'**il monté autour de la gorge de l'arbre (130) ;
c. ledit anneau élastique (211, 212, 412) étant constitué d'un fil cintré selon une forme circulaire et selon un angle supérieur à 360 °.

2. Démarreur selon la revendication précédente dans lequel l'enroulement du fil de l'anneau est supérieur à 540°.

3. Démarreur selon la revendication précédente 1 ou 2, dans lequel le fil se recouvre sur une portion angulaire supérieure à 180°.

4. Démarreur selon l'une des revendications précédentes, dans lequel au moins une des extrémités du fil comprends un rétrécissement progressif de la largeur radial formant une pente.

5. Démarreur électrique selon l'une des revendications précédentes, dans lequel l'anneau élastique (211, 212, 412) comporte un soyage (221, 222, 422) en regard de chaque extrémité du fil.

6. Démarreur électrique selon la revendication précédente, dans lequel ledit soyage (221) est un soyage selon la direction radiale de l'anneau (211).

7. Démarreur électrique selon la revendication 4, dans lequel ledit soyage (222, 422) est un soyage selon la direction axiale de l'anneau (212, 412).

8. Démarreur électrique selon la revendication 1, dans lequel l'anneau (211, 212, 412) est constitué d'un fil plat.

9. Démarreur électrique selon la revendication 4, dans lequel les deux extrémités du fil de l'anneau (412) arrivent en vis-à-vis l'une de l'autre, en regard du même soyage (422).

10. Démarreur électrique selon la revendication 1, dans lequel le fil constituant l'anneau élastique (211, 212, 412) est constitué d'un acier à bas carbone.

11. Démarreur électrique selon la revendication 1, dans lequel le fil constituant l'anneau élastique (211, 212, 412) est constitué d'un alliage de titane.

12. Démarreur électrique selon la revendication 1, dans lequel le fil constituant l'anneau élastique (211, 212, 412) est constitué d'un alliage superélastique.

13. Démarreur selon l'une des revendications précédentes 9 à 10, dans lequel le pignon (120) lanceur comporte sur sa face venant en appui sur la butée, un lamage (121) apte à coiffer l'anneau élastique (211, 212, 412) du dispositif selon la revendication 1.

14. Procédé pour l'assemblage de l'anneau élastique (211, 212, 412) autour de la gorge (330) de l'arbre (130), selon l'une quelconque des revendications précédentes, **caractérisé en ce qu'**il comprend les étapes consistant à :
i. placer (510) un mandrin (515) conique sur l'extrémité de l'arbre (130), le grand diamètre du cône étant placé contre ladite extrémité de l'arbre ;
ii. enfiler (520) l'anneau élastique (211, 212, 412) sur le mandrin (515) conique par le petit diamètre du cône ;
iii. pousser (530) l'anneau (211, 212, 412) sur le mandrin (515) conique puis sur l'arbre (130) jusqu'à ce qu'il pénètre dans la gorge (330) de l'arbre.

15. Procédé pour l'assemblage d'un dispositif d'arrêt axial selon la revendication 1, placé en extrémité d'un arbre (130), **caractérisé en ce qu'**il comprend les étapes consistant à :
x. écarter axialement une extrémité du fil du reste de l'anneau (211, 212, 412) et placer ladite extrémité dans la gorge (330), la portée de l'arbre entre la gorge et son extrémité axiale étant insérée entre l'extrémité écartée du fil et le reste de l'anneau ;
y. tourner l'anneau (211, 212, 412) relativement à l'arbre jusqu'à ce qu'il soit entièrement introduit dans la gorge (330).
